# EUROPEAN PATENT APPLICATION

(11) **EP 4 645 562 A1**
(43) Date of publication of application: **05.11.2025**
(21) Application number: 24840154.9
(22) Date of filing: 30.05.2024
(51) Int. Cl.: H01M 50/342, H01M 50/383, H01M 50/289, H01M 50/271, H01M 50/211, H01M 50/249

(54) **BATTERY MODULE, BATTERY PACK AND VEHICLE INCLUDING SAME**

(30) Priority: 13.07.2023 KR 20230091291
(71) Applicant: LG Energy Solution, Ltd., Seoul 07335 (KR)
(72) Inventor: HEO, Sam-Hoe, Daejeon 34122 (KR); KIM, Jong-Jin, Daejeon 34122 (KR); PARK, Dong-Ho, Daejeon 34122 (KR); PARK, Jeong-Jae, Daejeon 34122 (KR); LEE, Geum-Pyo, Daejeon 34122 (KR); JUNG, Ki-Taek, Daejeon 34122 (KR); CHOI, Wan-Sup, Daejeon 34122 (KR)
(74) Representative: BCKIP Part mbB
(86) International application number: PCT/KR2024/095863
(87) International publication number: WO 2025/014344

(57) **Abstract**

Disclosed is a battery module, which includes a cell stack including a plurality of battery cells; a module case configured to accommodate the cell stack and having at least one venting hole provided to at one side so that a venting gas discharged from the battery cell is discharged therethrough; a top cover coupled to one side of the module case to form at least one cover hole corresponding to the venting hole; and a venting sheet configured to cover the venting hole and the cover hole, respectively.

## Description

### TECHNICAL FIELD

The present disclosure relates to a battery module, and a battery pack and a vehicle including the same.

The present application claims priority to Korean Patent Application No. 10-2023-0091291 filed on July 13, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. If a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, since battery cells involve chemical reactions during charging and discharging, the performance may deteriorate if the battery cells are used in a higher-temperature environment than an appropriate temperature, and if the heat is not controlled to an appropriate temperature, there is always a possibility of unexpected ignition or explosion. Also, the battery module has a structure in which the battery cells are intensively accommodated inside the module housing. Therefore, if a thermal event occurs in one battery cell, it is very dangerous because the discharged high-temperature gas and flame may transfer to adjacent battery cells, resulting in a series of battery cell explosions.

Therefore, when thermal runaway occurs in the battery module, there is a need to develop a structure that may prevent heat accumulation inside the battery module by discharging the high-temperature gas or flame generated inside the battery module to the outside and also prevent the discharged gas or flame from flowing back into the battery module.

Moreover, even if a thermal event occurs in some battery cells within the battery module, there is a need to develop a structure that may suppress and delay heat propagation so as to prevent gas or flame from transferring to other battery cells within the battery module and causing thermal runaway by securely partitioning and separating the battery cells.

### DISCLOSURE

### Technical Problem

Therefore, the present disclosure is directed to providing a battery module that may effectively prevent or delay the propagation of thermal runaway between cells by smoothly discharging gas or flame generated inside the battery module to the outside of the battery module when thermal runaway occurs in the battery module.

The present disclosure is also directed to providing a battery module with improved safety and reliability by preventing gas or flame discharged to the outside of the battery module from flowing back into the battery module when thermal runaway occurs in the battery module.

In addition, the present disclosure is also directed to providing a battery module that may effectively prevent or delay the propagation of thermal runaway between the battery cells by clearly partitioning and separating the battery cells.

In addition, the present disclosure is also directed to providing a battery pack and a vehicle that include the battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module, comprising: a cell stack including a plurality of battery cells; a module case configured to accommodate the cell stack and having at least one venting hole provided to at one side so that a venting gas discharged from the battery cell is discharged therethrough; a top cover coupled to one side of the module case to form at least one cover hole corresponding to the venting hole; and a venting sheet configured to cover the venting hole and the cover hole, respectively.

The venting sheet may have a cutting line configured to be opened by a pressure of the venting gas.

The venting sheet may be provided in plurality and individually prepared for each venting hole, and when the battery cell is vented, only the cutting line of the venting sheet provided above the vented battery cell may be opened.

The venting sheet may be opened only in one direction to prevent the venting gas from flowing back.

The module case may include a case body having an open upper surface and configured to accommodate the cell stack; and a top plate configured to cover the open upper surface of the case body and having the venting hole, and the top cover may be connected to the top plate.

The top plate may include a seating portion configured to protrude upward from the venting hole so that the venting sheet is seated thereon.

The seating portion may be provided to protrude into the venting hole.

The venting sheet may be provided to be adhered to the seating portion.

The cell stack may include at least one blocking member configured to partition the plurality of battery cells, and the top plate may further include a fixing portion configured to protrude downward from a lower surface of the top plate so that one end of the blocking member is inserted therein.

The blocking member may be provided in plurality along one direction, and the venting hole may be located between the blocking members adjacent to each other.

At least one battery cell may be located between the blocking members adjacent to each other, and the blocking member may extend beyond the battery cell and is inserted into the fixing portion, and thus an airtight space may be formed by the blocking members adjacent to each other and the fixing portion.

The fixing portion may include a first fixing portion and a second fixing portion provided to face each other, and one end of the blocking member may be inserted between the first fixing portion and the second fixing portion.

The first fixing portion and the second fixing portion may be provided in plurality, respectively, and individually provided for each venting hole.

The seating portion and the fixing portion may be formed integrally and connected to the top plate.

In addition, according to an embodiment of the present disclosure, there is provided a battery pack including the battery module according to the present disclosure.

In addition, according to an embodiment of the present disclosure, there is provided a vehicle including the battery pack according to the present disclosure.

### Advantageous Effects

According to one aspect of the present disclosure, when an abnormal situation occurs in the battery cell, high-temperature gas or flame generated in the battery cell may be smoothly discharged to the outside of the battery module, effectively preventing or delaying the propagation of thermal runaway between cells. Thereby, the safety and reliability of the battery module may be guaranteed.

In addition, according to an aspect of the present disclosure, when an abnormal situation occurs in the battery cell, high-temperature gas or flame generated from the battery cell may be prevented from flowing back into the battery module.

In addition, according to an aspect of the present disclosure, since the battery cells within the battery module are securely partitioned and separated, even if a thermal event occurs in some battery cells within the battery module, it is possible to effectively prevent or delay the gas or flame from transferring to other battery cells within the battery module.

In addition, according to an aspect of the present disclosure, it is possible to prevent or delay an event due to thermal runaway of a battery pack including a plurality of battery modules or a device to which the battery pack is mounted, such as fire or explosion.

Moreover, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery module according to an embodiment of the present disclosure.
FIG. 2 is an exploded perspective view showing the battery module according to an embodiment of the present disclosure.
FIG. 3 is a plan view showing the battery module according to an embodiment of the present disclosure.
FIG. 4 is an exploded perspective view showing main components of the battery module according to an embodiment of the present disclosure.
FIG. 5 is a cross-sectional view showing the battery module according to an embodiment of the present disclosure.
FIG. 6 is an enlarged view showing the portion A of FIG. 5.
FIG. 7 is a diagram to explain that a part of the venting sheet is opened when thermal runaway occurs in the battery module according to an embodiment of the present disclosure.
FIG. 8 is a perspective view showing a lower surface of a top plate included in a battery module according to another embodiment of the present disclosure.
FIG. 9 is a cross-sectional view showing the battery module according to another embodiment of the present disclosure.
FIG. 10 is a cross-sectional view, taken along line I-I' of FIG. 9.
FIG. 11 is an enlarged view showing the portion B of FIG. 9.
FIG. 12 is an exploded perspective view showing main components of a battery module according to still another embodiment of the present disclosure.
FIG. 13 is a schematic perspective view showing a battery pack including the battery module according to an embodiment of the present disclosure.
FIG. 14 is a perspective view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Also, the present disclosure includes many different embodiments. Substantially identical or similar components for these embodiments will be described in duplication, and different features will be described in detail.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the forward/backward direction, the Y-axis direction may indicate the left/right direction perpendicular to the X-axis direction on the flat plane (X-Y plane), and the Z-axis direction may indicate the upward/downward direction (vertical direction) perpendicular to both the X-axis direction and the Y-axis direction.

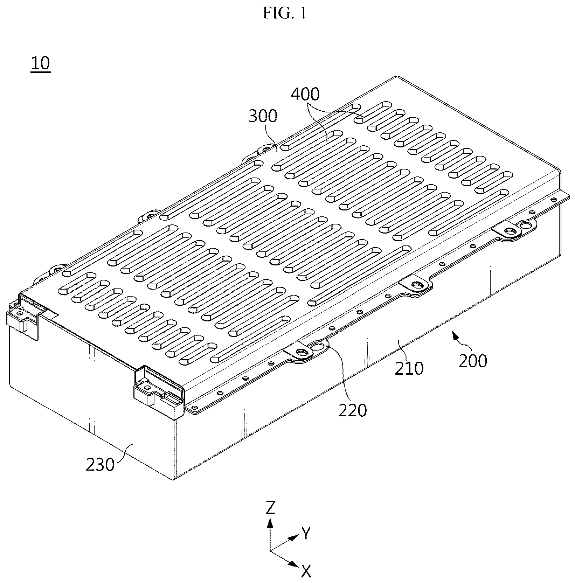

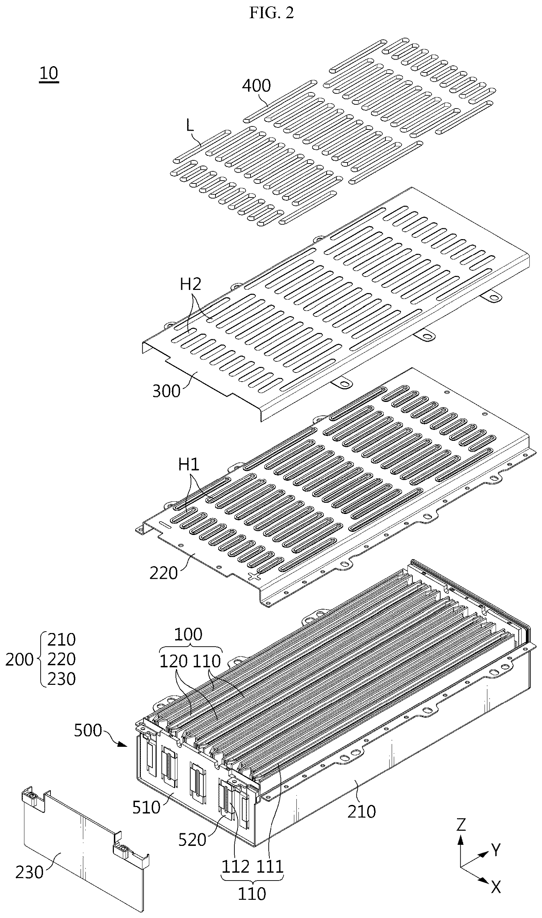

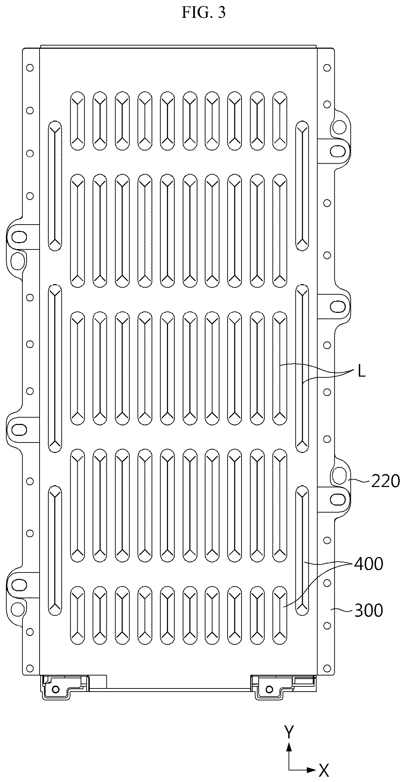

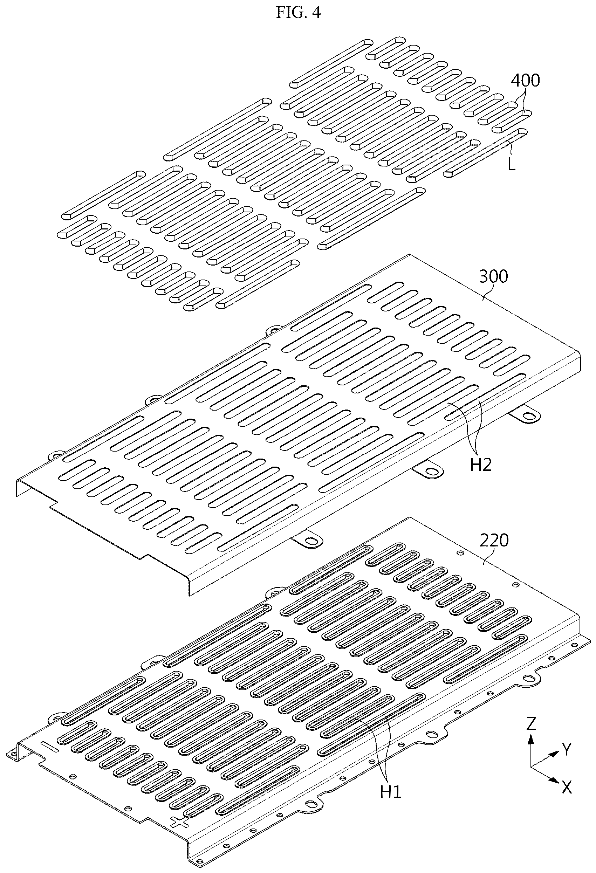

FIG. 1 is a perspective view showing a battery module according to an embodiment of the present disclosure, FIG. 2 is an exploded perspective view showing the battery module according to an embodiment of the present disclosure, FIG. 3 is a plan view showing the battery module according to an embodiment of the present disclosure, and FIG. 4 is an exploded perspective view showing main components of the battery module according to an embodiment of the present disclosure.

Referring to FIGS. 1 to 4, the battery module 10 according to an embodiment of the present disclosure may include a cell stack 100, a module case 200, a top cover 300, and a venting sheet 400.

The cell stack 100 may include a battery cell 110. A plurality of battery cells 110 may be provided.

The plurality of battery cells 110 may be, for example, pouch-type secondary batteries. Each of the plurality of battery cells 110 may have an electrode lead 112. Specifically, the plurality of battery cells 110 may include an electrode assembly, a cell case 111 accommodating the electrode assembly, and an electrode lead 112 connected with the electrode assembly and extending to the outside of the cell case 111 to function as an electrode terminal. The cell case 111 may accommodate the electrode assembly in the storage portion, and the border around the storage portion may be heat-sealed to form a sealing portion.

A pair of electrode leads 112 may be provided, and the pair of electrode leads 112 may extend from both ends of the battery cell 110, that is, in the longitudinal direction (the ±Y-axis directions). In this case, the pair of electrode leads 112 may be a positive electrode lead and a negative electrode lead. If necessary, the battery cell 110 may have two electrode leads 112 disposed only at one end thereof in the Y-axis direction, for example, the +Y-axis direction.

As shown in FIG. 2 or the like, the plurality of battery cells 110 may be disposed side by side in the left/right direction (X-axis direction) while standing in the vertical direction (Z-axis direction). In this case, a sealing portion of each battery cell 110 may be directed in the forward/backward direction (Y-axis direction) and the upward/downward direction (Z-axis direction), and a storage portion may be directed in the left/right direction (X-axis direction).

The present disclosure is not limited to a specific type or form of battery cell 110, and various battery cells 110 known at the time of filing of this application may be applied to configure the cell stack 100 of the present disclosure. Although this embodiment will be described based on a pouch-type secondary battery, as shown in the drawing, that has high energy density and is easy to stack, a cylindrical or prismatic secondary battery may be applied to the battery cell 110.

The cell stack 100 may further include a blocking member 120. The blocking member 120 may be provided between the battery cells 110. In particular, a plurality of blocking members 120 may be included in one cell stack 100. The blocking member 120 may be made of a material with excellent heat resistance and/or fire resistance, such as mica. In this embodiment, a plurality of blocking members 120 may be provided so that the blocking member 120 is arranged for every two or more battery cells 110. According to the embodiment of the present disclosure, the battery cells 110 may be partitioned or separated to prevent gas or flame from passing over and propagating to other blocking members 120 adjacent to the blocking member 120.

Alternatively, the blocking member 120 may be provided in the form of a compressive pad, for example, using a material such as silicone or aerogel. According to the embodiment of the present disclosure, the blocking member 120 may contribute to the structural rigidity of the battery cells 110 by compressing the battery cells 110 when a swelling phenomenon occurs in the battery cells 110.

Meanwhile, referring to FIG. 2, the battery module 10 of the present disclosure may further include a bus bar frame assembly 500. The bus bar frame assembly 500 may be provided inside the module case 200 and configured to cover at least one side of the cell stack 100. In this embodiment, as shown in FIG. 2, the bus bar frame assembly 500 may be coupled to the front and rear sides of the cell stack 100.

The bus bar frame assembly 500 may include a bus bar frame 510 and a plurality of bus bars 520. The bus bar frame 510 may be provided to be substantially coupled to the front side and the rear side of the cell stack 100. The bus bar frame 510 may be provided with slits through which the electrode lead 112 of the battery cell 110 may extend in the +Y-axis or -Y-axis direction. In addition, the bus bar frame 510 may be made of, for example, a plastic material with electrical insulation properties, and may be configured such that the bus bar 520 may be attached to its outer surface.

In addition, the bus bar frame 510 may be press-fitted to the front or rear end of the cell stack 100.

Meanwhile, the plurality of bus bars 520 are means for connecting the battery cells 110 in series and/or parallel, and may be made of a metal material such as copper, aluminum, nickel, or the like, and may be configured in the form of a bar. The electrode leads 112 of the battery cells 110 may extend to the outside of the bus bar frame 510 by passing through the slits of the bus bar frame 510, and the extended portion may be attached to the surface of the bus bar 520 by welding or other methods. When the electrode leads 112 of the battery cells 110 and the bus bars 520 are welded in a predetermined pattern at the front and rear ends of the cell stack 100, the battery cells 110 may be connected in series and/or parallel.

Meanwhile, referring to FIGS. 1 and 2, the battery module 10 according to an embodiment of the present disclosure may include a module case 200. The module case 200 may be configured to accommodate the cell stack 100. Specifically, an inner space is formed in the module case 200, and the module case 200 may be configured to accommodate the cell stack 100 and the bus bar frame assembly 500 in the inner space.

Meanwhile, referring to FIG. 2, the module case 200 may include a case body 210. For example, the case body 210 may be provided as a U-frame. When the case body 210 is provided as a U-frame, it may be provided to cover both side surfaces and the lower surface of the cell stack 100. The case body 210 may include a left plate and a right plate that cover both side surfaces of the cell stack 100, and a lower plate that covers the lower surface of the cell stack 100. Also, the left plate, right plate, and bottom plate may be configured to be integrated with each other. At this time, the top surface and the front and rear surfaces of the case body 210 may be open. The case body 210 may be made of a metal material with rigidity and heat resistance in order to physically or chemically protect the battery cells 110 accommodated therein.

The module case 200 may further include a top plate 220. The top plate 220 may be provided to form the upper surface of the module case 200. When the case body 210 is provided as a U-frame, the top plate 220 may be coupled to the open upper surface of the case body 210. The top plate 220 may be coupled to the case body 210 by welding. At this time, the top plate 220 and the case body 210 coupled to each other may form a rectangular tube with open front and back sides.

In addition, the case body 210 may be provided so that the battery cells 110 may be inserted therein along one direction. For example, the battery cells 110 may be inserted into the case body 210 along the front/rear direction (Y-axis direction). In other words, the case body 210 may be configured so that the battery cells 110 may be inserted therein in a slide manner.

Meanwhile, the module case 200 may include end plates 230 provided at the open front and rear sides of the case body 210. The end plate 230 may be coupled to the case body 210 by welding. Meanwhile, although not shown for convenience, the end plate 230 may, for example, be made of an insulating material at the inner side and a metal material at the outer side. Also, the end plate 230 may partially have a hole or slit to expose a component that needs to be exposed to the outside, such as positive and negative electrode terminals or connectors of the battery module 10.

In addition, the module case 200 may be formed in various other forms. For example, the module case 200 may include a box-shaped lower case with a top open end and an upper cover that closes the top open end of the lower case. At this time, the lower case may be configured so that left and right plates that covers both side surfaces of the cell stack 100 and front and rear plates that covers the front and back of the cell stack 100 are integrated with each other.

Alternatively, the module case 200 may be provided as a mono frame. For example, the case body 210 may be configured in the form of a rectangular tube that includes an upper surface, a lower surface, a left side, and a right side, with the front and rear sides being open. According to the module case 200 including the mono frame, the battery module 10 may be assembled by assembling the cell stack 100 and the bus bar frame assembly 500, inserting the assembly into the mono frame in a press-fitting manner, and coupling the end plates 230 to both open portions of the mono frame. At this time, for press-fitting, there may be almost no gap between the lower surfaces and the top plate 220 of the case body 210 and the battery cells 110, and there may be almost no gap between both sides of the case body 210 and both sides of the battery cells 110.

Meanwhile, a venting hole H1 may be formed in the module case 200. The venting hole H1 may be configured to discharge a venting gas generated in the battery cell 110 to the outside of the module case 200. The venting hole H1 may be formed in one side of the module case 200, and may allow directional venting in one direction.

For example, as shown in FIG. 4, the venting hole H1 may formed in the upper portion of the module case 200, that is, in the top plate 220, and directional venting toward the upper portion of the battery module 10 may be possible through the venting hole H1. The venting hole H1 may be provided in plurality, and the plurality of venting holes H1 may be provided at regular intervals in the horizontal direction (X-axis, Y-axis direction).

The plurality of venting holes H1 may be located between neighboring blocking members 120 among the plurality of blocking members 120 arranged in one direction.

In other words, the venting hole H1 may be provided in the upper portion of at least one battery cell 110 provided between neighboring blocking members 120. For example, as shown in FIG. 2, in the battery module 10 according to an embodiment of the present disclosure, the blocking member 120 is disposed between every two battery cells 110, and a plurality of venting holes H1 may be formed in a row along the longitudinal direction (Y-axis direction) of the battery cell 110 on the upper portion of the battery cells 110 provided between the blocking members 120.

In this way, the venting hole H1 provided in the top plate 220 may be provided to discharge gas or flame generated inside the battery module 10 to the outside of the battery module 10 when thermal runaway occurs in the battery module 10. Except for the venting hole H1, the remaining portions of the module case 200 are sealed, and gas or flame may be discharged straight toward the venting hole H1.

According to the embodiment of the present disclosure, even if a thermal event occurs at any location of the battery cell 110, gas or flame generated from the battery cell 110 are discharged to the outside of the battery module 10 through specific venting holes H1 provided at the upper portion of the battery cell 110, so venting may be done smoothly.

Meanwhile, the battery module 10 according to an embodiment of the present disclosure may further include a top cover 300.

The top cover 300 may be made of a material with excellent heat resistance and/or fire resistance, for example, a pad coupled with mica or FRB (Fire Resistant Barrier) and silicon. The FRB may contain inorganic materials that are easily converted and may be made of materials with very high flame retardancy and excellent flammability resistance. Therefore, when a pad coupled with FRB and silicon is provided, shape stability may be maintained without shrinkage even when high-temperature heat is generated, and thus high-temperature gas or flame generated from battery cell 110 may be stably blocked. In addition, by providing the top cover 300, even if a thermal event occurs inside the battery module 10, heat of high temperature gas or flame may be prevented from being conducted to the outside.

A cover hole H2 may be formed in the top cover 300. The cover hole H2 may be provided in plurality and may be prepared to correspond to the venting hole H1. That is, the cover hole H2 may be provided in the same shape and size as the venting hole H1 at the location where the venting hole H1 is formed.

The top cover 300 may be coupled to one side of the module case 200. For example, the top cover 300 may be provided to be attached to the upper portion of the module case 200. Specifically, the top cover 300 may be coupled to the top plate 220. That is, the top cover 300 may be coupled to the remaining portion of the top plate 220 except for the portion where the cover hole H2 is formed. The top cover 300 may be attached to the top plate 220 by an adhesive member. The adhesive member may include an adhesive, an adhesive tape, etc.

The battery module 10 according to an embodiment of the present disclosure may be manufactured by accommodating the cell stack 100 in the case body 210, welding the top plate 220 and the end plate 230 to the case body 210 to complete the appearance of the battery module 10, then applying the adhesive member to the top cover 300, and assembling the top cover 300 thereon. In this case, all portions of the top cover 300 except for the cover hole H2 may be attached to the top plate 220 by the adhesive member.

The battery module 10 according to an embodiment of the present disclosure may further include a venting sheet 400. The venting sheet 400 may be configured to cover each venting hole H1. At the same time, the venting sheet 400 may be configured to cover each cover hole H2. In other words, the venting sheet 400 may be configured to cover the venting hole H1, and the top cover 300 may be configured to cover the remaining portion of the top plate 220 except for the venting hole H1. The venting sheet 400 may be made of a material with flame retardant performance. For example, the venting sheet 400 may be made of a rigid material with a high melting point, such as SUS, or a rigid material with fire resistance and insulation performance. As a result, even if an external force is applied to the venting sheet 400, the venting sheet 400 may not be easily deformed, thereby reducing the risk of the venting hole H1 being accidentally exposed.

When thermal runaway occurs within the battery module 10, the adhesive member may melt due to the pressure of gas discharged from the battery cell 110 and/or high-temperature heat such as dust or flame, thereby reducing the adhesive strength between the module case 200 and the top cover 300. If the top cover 300 and the venting sheet 400 are not divided into two parts and the top cover 300 is configured as one part to cover even the venting hole H1, different from the present disclosure, the discharge pressure of the venting gas may be applied between the module case 200 and the top cover 300 with weakened adhesion, so that the top cover 300 may be pushed in the discharge direction of the venting gas and separated from the module case 200. At this time, if the top cover 300 is left without being separated from the module case 200 in a state where the adhesive strength of the adhesive member is weakened, the exhaust of venting gas or flame may be hindered, and also there may be a risk that the venting gas or flame flows back into the battery module 10 through the excited interface between the top cover 300 and the module case 200.

Meanwhile, according to the embodiment of the present disclosure, the top cover 300 and the venting sheet 400 are divided into two parts so that the venting hole H1 is covered by the venting sheet 400 and parts other than the venting hole H1 are covered by the top cover 300, so it is possible to fundamentally prevent the top cover 300 from being lifted from the module case 200 due to high-temperature gas or flame when a thermal event occurs. In other words, since the top cover 300 and the venting sheet 400 are divided into separate parts, it is possible to prevent the area of the top cover 300 adjacent to the venting hole H1 from being lifted so that gas or flame flows into the adjacent venting hole H1. By providing the venting sheet 400 separately, the area of the top cover 300 adjacent to the venting hole H1 is prevented from being lifted. As a result, gas or flame discharged to the outside may be prevented from flowing back into the battery module 10. Accordingly, the safety and reliability of the battery module 10 may be guaranteed.

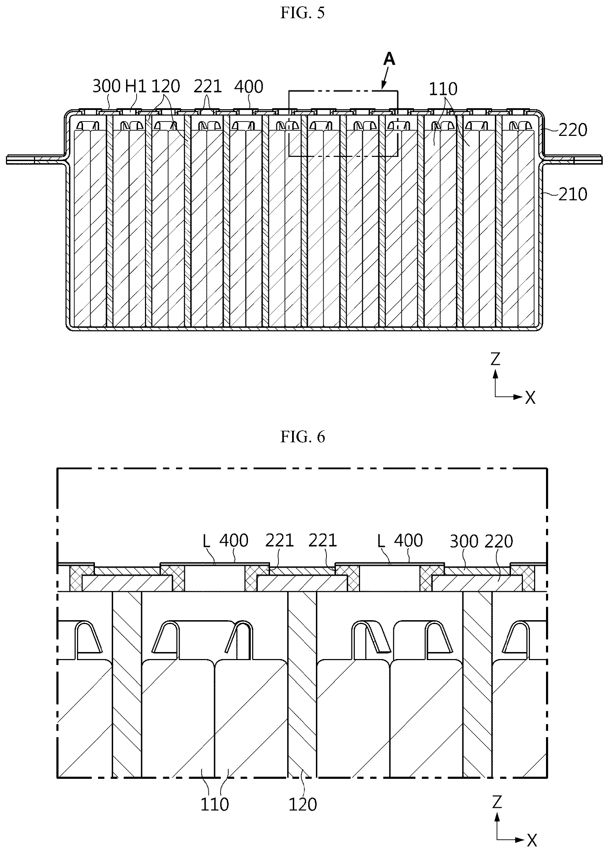

FIG. 5 is a cross-sectional view showing the battery module according to an embodiment of the present disclosure, and FIG. 6 is an enlarged view showing the portion A of FIG. 5.

Referring to FIGS. 5 and 6 along with FIG. 4, the top plate 220 may include a seating portion 221. The portion seating 221 may be configured so that the venting sheet 400 may be seated thereon. The seating portion 221 may be provided to protrude upward from the venting hole H1. Specifically, the seating portion 221 may be provided to protrude upward along the outer circumference of the venting hole H1. At this time, the length of the venting sheet 400 in the left/right direction may be longer than the diameter of the venting hole H1 in the left/right direction, and may be provided to be equal to the diameter of the seating portion 221 in the left/right direction. Accordingly, the venting sheet 400 may be seated on the seating portion 221 and completely cover the venting hole H1.

Also, the seating portion 221 may be provided to protrude into the venting hole H1. As a result, the area where the venting sheet 400 is in contact with the seating portion 221 becomes wider, so that the venting sheet 400 may be more stably seated on the seating portion 221 and cover the venting hole H1.

The venting sheet 400 may be provided to be attached to the seating portion 221. For example, the venting sheet 400 may be attached to the seating portion 221 using an adhesive member such as double-sided tape. According to the embodiment of the present disclosure, the venting sheet 400 may be adhered and fixed to the seating portion 221, thereby stably covering the venting hole H1.

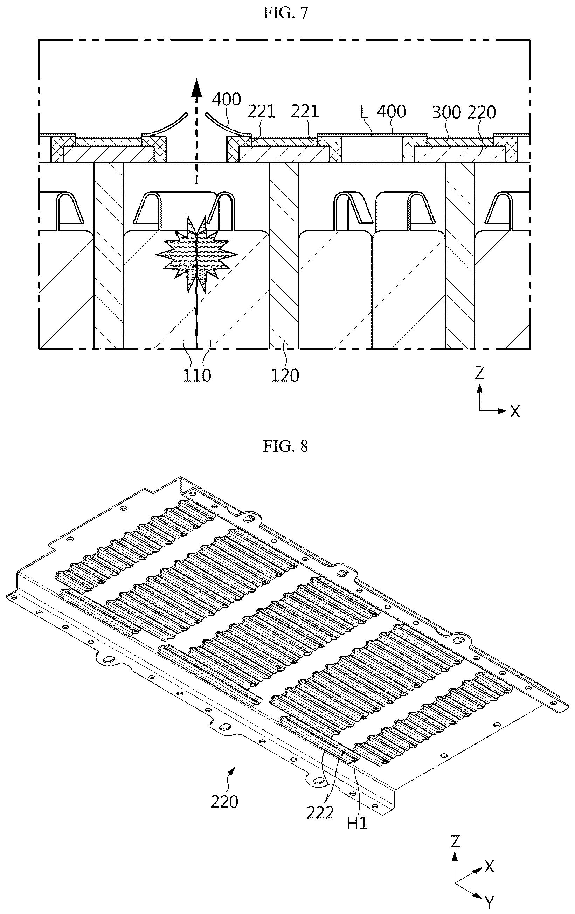

FIG. 7 is a diagram to explain that a part of the venting sheet is opened when thermal runaway occurs in the battery module according to an embodiment of the present disclosure.

Referring to FIG. 7, when a thermal event occurs, the venting sheet 400 may be configured to be opened by the pressure of the venting gas or flame discharged from the battery cell 110. The thickness of the venting sheet 400 may be thin enough to be opened by the pressure of venting gas or flame.

Specifically, referring to FIGS. 4 and 7, the venting sheet 400 may have a cutting line L. When gas is discharged from any venting hole H1, the cutting line L of the venting sheet 400 covering the venting hole H1 may be ruptured so that the gas may be discharged to the outside (gas may be discharged along the direction of the dotted arrow in FIG. 7).

The cutting line L may be ruptured by the pressure of the venting gas or flame and opened in the direction along which the venting gas or flame is discharged. The cutting line L may be provided as a broken or solid line by forming a groove or notch in a portion of the venting sheet 400. For example, as shown in FIGS. 3 and 4, the cutting line L may be provided in a fish bone shape. That is, the cutting line L may be formed in an approximately straight line along the extension direction of the venting sheet 400, so that the end in the extension direction is branched. For example, the cutting line L may include a center cutting line that is elongated long along the front/rear direction (Y-axis direction), which is the longitudinal direction of the venting sheet 400, and branch cutting lines that branch off from both ends of the center cutting line. More specifically, the branch cutting line may include two front end cutting lines that are formed in a branched form at a predetermined angle with the center cutting line at the front end of the center cutting line. Also, the branch cutting line may include two rear end cutting lines that are formed in a branched form at a predetermined angle with the center cutting line at the rear end of the center cutting line. In particular, the front end cutting line or the rear end cutting line may be formed to have a right or obtuse angle with the center cutting line. According to the embodiment of the present disclosure, the venting sheet 400 may be clearly deployed along the cutting line L to open the venting hole H1.

Alternatively, the cutting line L may be provided to be weaker than adjacent areas so that it may be easily ruptured by the pressure of venting gas or flame. Alternatively, the cutting line L may be formed by cutting a portion of the venting sheet 400 with a sharp object such as a knife. For example, the cutting line L may be prepared such that the knife cuts linearly through the venting sheet 400. The cutting line L may be replaced by a term such as slit. In this case, as the cutting line L is opened by the pressure of the venting gas, without the cutting line L needing to be ruptured, the venting gas or flame may be easily discharged through the opened portion.

According to the embodiment of the present disclosure, when a thermal event occurs, the venting sheet 400 may be opened, so the venting hole H1 may be exposed to the outside of the battery module 10, and as a result, the venting sheet 400 does not shield the venting hole H1. As a result, gas or flame may be completely discharged to the outside of the battery module 10.

Meanwhile, referring to FIG. 4, the venting sheet 400 may be provided in plurality. The venting sheet 400 may be prepared individually for each of the plurality of venting holes H1. The venting sheet 400 may be configured to cover each of the plurality of venting holes H1 in a normal state. However, when a thermal event occurs inside the battery module 10, only some venting sheets 400 of the plurality of venting sheets 400 may be configured to be opened. When venting the battery cell 110, only the cutting line L of the venting sheet 400 provided above the vented battery cell 110 may be configured to be opened. Specifically, when gas is discharged from the venting hole H1 corresponding to the vented battery cell 110, only the cutting line L provided on the venting sheet 400 that covers the venting hole H1 may be ruptured. Also, except for the open venting sheet 400, the remaining venting sheets 400 may be provided to keep covering the venting hole H1.

At this time, the venting sheet 400 may be configured to be open in only one direction. As a result, the venting sheet 400 may prevent the gas or flame discharged to the outside from flowing back into the battery module 10. In addition, the venting sheet 400, which is not open and covers the venting hole H1, may block not only heat but also high-temperature gas, flame, and discharges generated from the battery cell 110.

In other words, in a normal state, the venting sheet 400 may protect the cell stack 100 inside the module case 200 by shielding all venting holes H1. However, during a thermal event in which a venting gas or flame is generated in some battery cells 110, the venting sheet 400 provided above the vented battery cell 110 may be opened in one direction not to obstruct the path of gas or flame discharged in a straight line through the venting hole H1, so that the gas or flame is smoothly discharged to the outside of the battery module 10.

According to the embodiment of the present disclosure, it is possible not only to efficiently vent gas or flame existing inside the module case 200 through the open venting sheet 400, but also to prevent the gas or flame discharged through the opened venting sheet 400 from flowing back into the module case 200 by means of the venting sheet 400 that still covers the venting hole H1. Accordingly, thermal runaway propagation may be effectively prevented or delayed by minimizing heat propagation to neighboring battery modules 10, and thus the safety and reliability of the battery module 10 may be guaranteed.

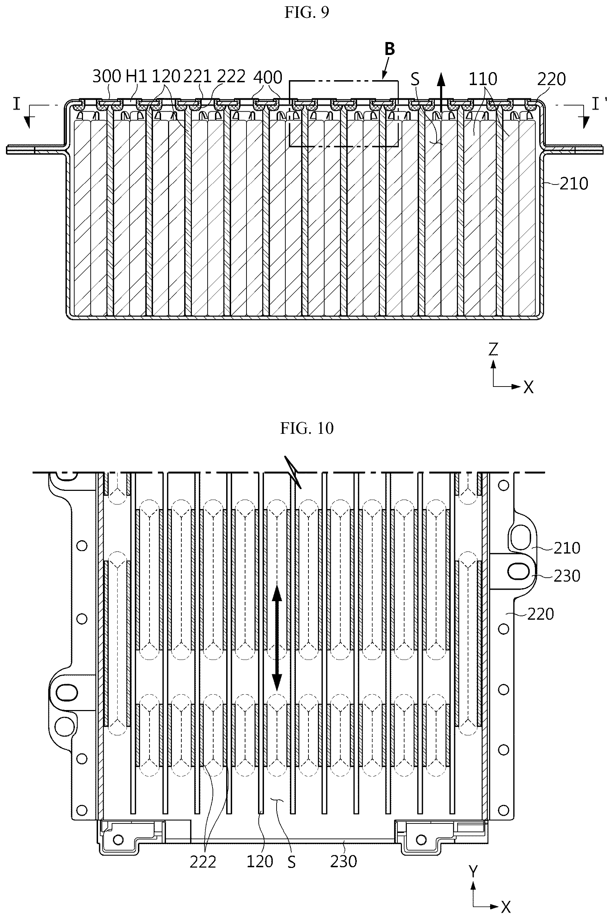

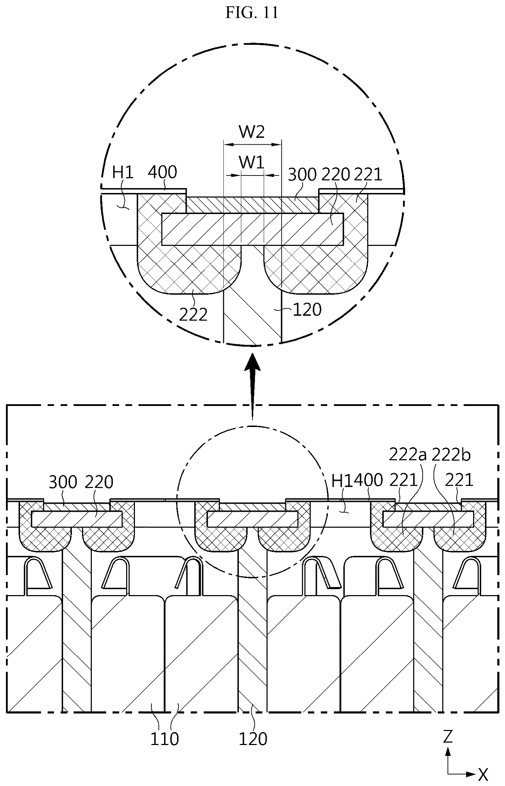

FIG. 8 is a perspective view showing a lower surface of a top plate included in a battery module according to another embodiment of the present disclosure, FIG. 9 is a cross-sectional view showing the battery module according to another embodiment of the present disclosure, FIG. 10 is a cross-sectional view, taken along line I-I' of FIG. 9, and FIG. 11 is an enlarged view showing the portion B of FIG. 9.

Meanwhile, in consideration of convenience in assembly or assembly tolerance, one side of the module case 200 and the blocking member 120 may be spaced apart by a predetermined gap. In such a case, when a thermal event occurs in one battery cell 110, there is a risk that the venting gas or flame may be transferred to other adjacent battery cells 110 through a certain gap formed between the blocking member 120 and the module case 200. Even if a gap is not formed between the blocking member 120 and one surface of the module case 200, if there is no device to separately fix the blocking member 120, bending deformation may occur in the blocking member 120 due to the pressure of venting gas or flame, which may cause the blocking member 120 to be moved in the left/right direction. Accordingly, a gap is formed between the blocking member 120 and the module case 200, and there is a possibility that the venting gas or the like is transferred to other adjacent battery cells 110 through the gap.

Accordingly, referring to FIGS. 8 to 11, the battery module 10 according to an embodiment of the present disclosure may include a fixing portion 222. The fixing portion 222 may be provided in the module case 200 and configured to fix the blocking member 120. The fixing portion 222 may be made of a material with excellent heat resistance and/or fire resistance so that an airtight structure may be maintained even under high heat and pressure. For example, the fixing portion 222 may be made of a fire-resistant plastic material.

According to the embodiment of the present disclosure, the battery cells 110 may be securely partitioned and separated by minimizing the space between the module case 200 and the blocking member 120. As a result, when a thermal event occurs in the battery cell 110, venting gas or flame is prevented from transferring to the adjacent battery cells 110, thereby ensuring the safety and reliability of the battery module 10.

Also, according to the embodiment of the present disclosure, since the blocking member 120 is fixed to the module case 200 by the fixing portion 222, it is possible to suppress bending deformation in the blocking member 120. Even if a thermal event occurs, the resulting high-temperature, high-pressure venting gas or flame may push out the blocking member 120, reducing the possibility of the venting gas or flame being transferred to other battery cells 110. As a result, when thermal runaway propagation occurs in the battery module 10, thermal runaway propagation between the battery cells 110 may be effectively prevented or delayed.

Referring to FIGS. 8 and 9, the fixing portion 222 may be provided on the lower surface of the top plate 220 to fix the upper end of the blocking member 120. The fixing portion 222 is located inside the battery module 10 and does not increase the height of the battery module 10 and may not cause a change in the appearance of the battery module 10. Also, the fixing portion 222 may be located in the empty space within the battery module 10 so as not to affect the energy density of the battery module 10.

The fixing portion 222 may be configured so that one end of the blocking member 120 is inserted therein. The number of the fixing portions 222 may correspond to the number of blocking members 120. At this time, the blocking member 120 may be provided to extend further in the vertical direction than the battery cell 110. That is, the height of the blocking member 120 in the vertical direction may be longer than the height of the battery cell 110 in the vertical direction. According to the embodiment of the present disclosure, the blocking member 120 may be inserted into the fixing portion 222 and supported at both sides, so it is possible to prevent one end of the blocking member 120 from moving in the left/right direction. As a result, the plurality of battery cells 110 may be partitioned and separated more securely.

At this time, referring to FIG. 9, one surface of the module case 200, that is, the top plate 220, and the blocking member 120 may be provided to contact each other. The blocking member 120 may be provided to extend further upward than the battery cell 110, and the upper end of the blocking member 120 may be provided to be inserted into the fixing portion 222. According to the embodiment of the present disclosure, since the gap between the blocking member 120 and the top plate 220 is minimized, the space through which venting gas may flow is reduced, so it is possible to prevent thermal runaway from propagating to other adjacent battery cells 110.

At this time, the fixing portion 222 may be provided in plurality along one direction. The one direction may be defined as a direction in which the blocking members 120 and the battery cells 110 are stacked, that is, the left/right direction (X-axis direction).

According to the embodiment of the present disclosure, gas or flame ejected from the battery cell 110 accommodated between adjacent blocking members 120 may be discharged to the outside of the module case 200 only through the venting hole H1 located between adjacent blocking members 120 by the fixing portion 222.

Also, referring to FIGS. 8 and 10, the fixing portion 222 may be provided in plurality and respectively provided for each venting hole H1. Accordingly, the fixing portions 222 may be configured to be spaced apart from each other along the longitudinal direction (Y-axis direction) of the blocking member 120. The length of the fixing portion 222 may correspond to the length of the venting hole H1.

According to the embodiment of the present disclosure, an airtight space S may be formed by neighboring blocking members 120 among the plurality of blocking members 120 and the fixing portion 222. Here, the airtightness has a concept that the movement of venting gas is limited between the battery cells 110 adjacent to each other in the left/right direction (X-axis direction) with one blocking member 120 interposed therebetween. That is, according to the embodiment of the present disclosure, the gas generated from any battery cell 110 may be induced to move in the longitudinal direction (along the thick arrow in FIG. 10) of the blocking member 120 within the airtight space S containing the battery cell 110.

In addition, the airtight space S is provided to communicate with the venting hole H1, so that gas generated in the battery cell 110 does not move toward other battery cells 110, but is guided only toward the venting hole H1 and is discharged. As a result, the venting gas or the like may be discharged in a target direction, such as the direction in which the venting hole H1 is formed (arrow direction in FIG. 9). In other words, since the outer circumference of the venting hole H1 is blocked, upward directional venting of the gas may be induced more effectively.

If the gas generated inside the battery module 10 is discharged in various directions, the time for the venting gas to be discharged may be prolonged, which may significantly reduce the safety of the battery module 10. According to this embodiment, the venting gas is quickly guided to the venting hole H1, thereby preventing the venting gas from spreading in all directions inside the module case 200.

The structure of the fixing portion 222 will be described in detail with reference to FIG. 11. The fixing portion 222 may include a first fixing portion 222a and a second fixing portion 222b that are provided to face each other. Each of the first fixing portion 222a and the second fixing portion 222b may be provided to protrude from one side of the module case 200. For example, as shown in FIG. 10, the first fixing portion 222a and the second fixing portion 222b may be provided to protrude downward from the lower surface of the top plate 220. The protruding lengths of the first fixing portion 222a and the second fixing portion 222b may be the same.

According to the embodiment of the present disclosure, the first fixing portion 222a and the second fixing portion 222b may not be formed integrally, but the gap w1 of a predetermined size may be provided between the first fixing portion 222a and the second fixing portion 222b in a region close to the top plate 220, so that the entire structure is not distorted and absorbs the deformation stress to maintain structural robustness even if the first fixing portion 222a and the second fixing portion 222b are deformed.

One end of the blocking member 120 may be inserted between the first fixing portion 222a and the second fixing portion 222b. At this time, the gap w1 between the first fixing portion 222a and the second fixing portion 222b may be smaller than the thickness w2 of the blocking member 120 (w1<w2).

Accordingly, one end of the blocking member 120 may be configured to be press-fitted between the first fixing portion 222a and the second fixing portion 222b. According to the embodiment of the present disclosure, the movement of the blocking member 120 in the left/right direction is further suppressed, so that the arrangement state of the battery cells 110 and the blocking members 120 may be maintained stably.

Referring to FIG. 11, the gap w1 between the first fixing portion 222a and the second fixing portion 222b may be configured to increase along the direction protruding from the module case 200. According to the embodiment of the present disclosure, one end of the blocking member 120 may be fixed at the lower side of the first fixing portion 222a and the second fixing portion 222b. According to the embodiment of the present disclosure, the gap w1 between the first fixing portion 222a and the second fixing portion 222b may be increased along the direction protruding from the module case 200, so that the blocking member 120 is stably press-fitted in the increased gap.

The first fixing portion 222a and the second fixing portion 222b may be prepared by processing two block-shaped structures. For example, as shown in FIG. 11, the edges of the block surface where the first fixing portion 222a and the second fixing portion 222b face each other may be rounded. Alternatively, the edges of the block surface where the first fixing portion 222a and the second fixing portion 222b face each other may be chamfered.

The first fixing portion 222a and the second fixing portion 222b may be manufactured as separate structures from the top plate 220 and may be adhered, fitted, or bolted to the top plate 220.

Alternatively, the first fixing portion 222a and the second fixing portion 222b may be formed integrally with the top plate 220. For example, the fixing portion 222 may be integrally provided on the lower surface of the top plate 220.

According to the embodiment of the present disclosure, since the fixing portion 222 is integrally provided with the top plate 220, the process of coupling the fixing portion 222 to the top plate 220 is omitted, and defects in the coupling portion of the fixing portion 222 and the top plate 220 may be minimized.

At this time, the fixing portion 222 may be provided as a groove formed by recessing at least a part of the top plate 220. The blocking member 120 may be inserted into the groove. In this case, the upper end of the blocking member 120 may be provided in close contact with the groove without any gap.

According to this embodiment of the present disclosure, since the end of the blocking member 120 is inserted into the groove of the top plate 220, the fixing force of the blocking member 120 may be further improved. In particular, when venting gas is generated from a specific battery cell 110, movement of the blocking member 120 in the left/right direction may be suppressed by the pressure of the venting gas.

Also, in this embodiment, the sealing force between the end of the blocking member 120 and the fixing portion 222 of the top plate 220 may be stably secured. Therefore, according to this embodiment, the performance of preventing heat spread between the cells by the blocking member 120 may be further improved, and the arrangement state of the battery cells 110 and the blocking members 120 may be maintained stably.

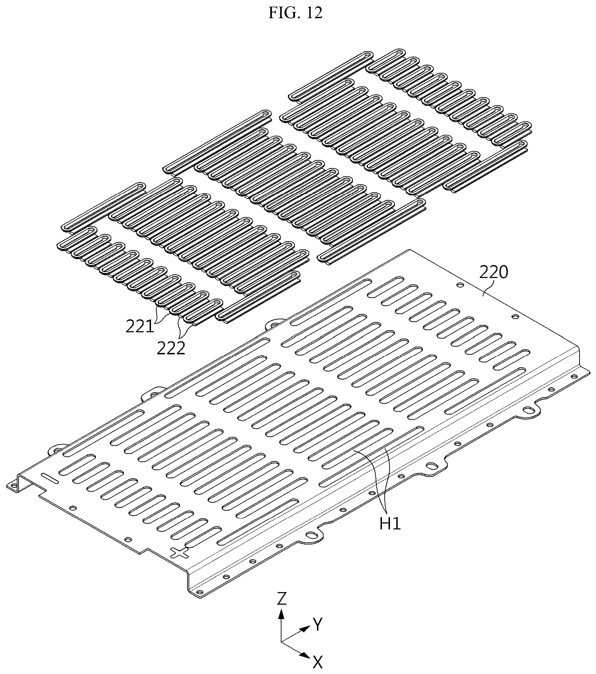

FIG. 12 is an exploded perspective view showing main components of a battery module according to still another embodiment of the present disclosure.

According to still another embodiment of the present disclosure, as shown in FIG. 12, the seating portion 221 and the fixing portion 222 may be integrally formed and coupled to the top plate 220. For example, the seating portion 221 and the fixing portion 222 may be formed by plastic injection and be fitted into the venting hole H1 of the top plate 220. According to the embodiment of the present disclosure, since the seating portion 221 and the fixing portion 222 are manufactured at the same time and connected to the top plate 220 at once, the process of manufacturing the seating portion 221 and the fixing portion 222 separately and connecting to the top plate 220 may be omitted. Also, when manufacturing the top plate 220, a separate process for forming the seating portion 221 and the fixing portion 222 may be omitted. Therefore, time and cost may be reduced in manufacturing the battery module 10, thereby improving productivity.

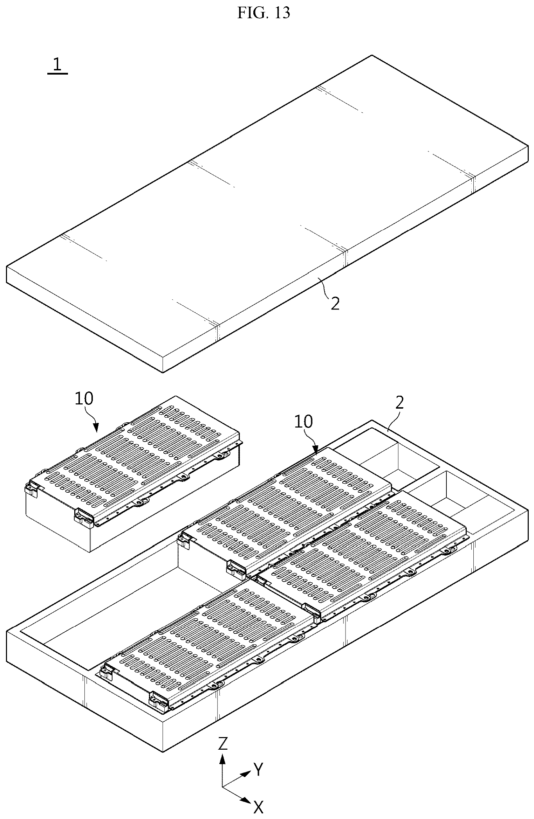

FIG. 13 is a schematic perspective view showing a battery pack including the battery module according to an embodiment of the present disclosure.

Referring to FIG. 13, a battery pack 1 according to an embodiment of the present disclosure may include one or more battery modules 10 according to an embodiment of the present disclosure described above. The battery pack 1 according to the present disclosure may further include a BMS (Battery Management System), a current sensor a fuse, or the like for integrated control of charging and discharging of one or more battery modules 10, and a pack case 20 for accommodating the above-mentioned elements.

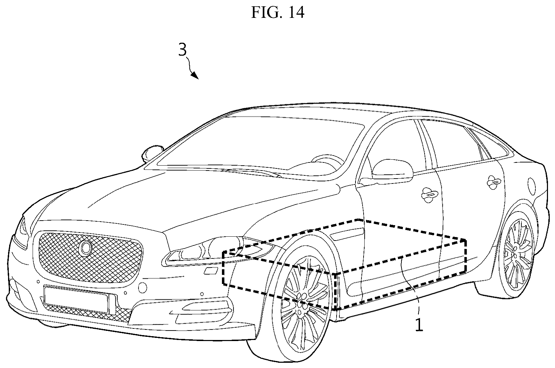

FIG. 14 is a perspective view showing a vehicle including the battery pack according to an embodiment of the present disclosure.

Referring to FIG. 14, the vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle or a plug-in hybrid vehicle. The vehicle 3 includes a four-wheeled vehicle and a two-wheeled vehicle. The vehicle 3 drives by receiving power from the battery pack 1 or the battery module 10 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module, comprising:
a cell stack including a plurality of battery cells;
a module case configured to accommodate the cell stack and having at least one venting hole provided to at one side so that a venting gas discharged from the battery cell is discharged therethrough;
a top cover coupled to one side of the module case to form at least one cover hole corresponding to the venting hole; and
a venting sheet configured to cover the venting hole and the cover hole, respectively.

2. The battery module according to claim 1,
wherein the venting sheet has a cutting line configured to be opened by a pressure of the venting gas.

3. The battery module according to claim 2,
wherein the venting sheet is provided in plurality and individually prepared for each venting hole, and
wherein when the battery cell is vented, only the cutting line of the venting sheet provided above the vented battery cell is opened.

4. The battery module according to claim 3,
wherein the venting sheet is opened only in one direction to prevent the venting gas from flowing back.

5. The battery module according to claim 1,
wherein the module case includes:
a case body having an open upper surface and configured to accommodate the cell stack; and
a top plate configured to cover the open upper surface of the case body and having the venting hole,
wherein the top cover is connected to the top plate.

6. The battery module according to claim 5,
wherein the top plate includes a seating portion configured to protrude upward from the venting hole so that the venting sheet is seated thereon.

7. The battery module according to claim 6,
wherein the seating portion is provided to protrude into the venting hole.

8. The battery module according to claim 6,
wherein the venting sheet is provided to be adhered to the seating portion.

9. The battery module according to claim 6,
wherein the cell stack includes at least one blocking member configured to partition the plurality of battery cells, and
wherein the top plate further includes a fixing portion configured to protrude downward from a lower surface of the top plate so that one end of the blocking member is inserted therein.

10. The battery module according to claim 9,
wherein the blocking member is provided in plurality along one direction, and
wherein the venting hole is located between the blocking members adjacent to each other.

11. The battery module according to claim 10,
wherein at least one battery cell is located between the blocking members adjacent to each other, and
wherein the blocking member extends beyond the battery cell and is inserted into the fixing portion,
whereby an airtight space is formed by the blocking members adjacent to each other and the fixing portion.

12. The battery module according to claim 9,
wherein the fixing portion includes a first fixing portion and a second fixing portion provided to face each other, and
wherein one end of the blocking member is inserted between the first fixing portion and the second fixing portion.

13. The battery module according to claim 12,
wherein the first fixing portion and the second fixing portion are provided in plurality, respectively, and individually provided for each venting hole.

14. The battery module according to claim 9,
wherein the seating portion and the fixing portion are formed integrally and connected to the top plate.

15. A battery pack, comprising the battery module according to any one of claims 1 to 14.

16. A vehicle, comprising the battery pack according to claim 15.
